# EUROPEAN PATENT APPLICATION

(11) **EP 4 538 845 A1**
(43) Date of publication of application: **16.04.2025**
(21) Application number: 23857569.0
(22) Date of filing: 17.07.2023
(51) Int. Cl.: G06F 3/0488, G06F 3/041, G06F 3/0484, G06F 3/04817, G06F 3/0482, H04M 1/72448, H04M 1/72403

(54) **METHOD AND APAPRATUS FOR DISPLAYING SCREEN BASED ON GESTURE INPUT**

(30) Priority: 25.08.2022 KR 20220106807; 05.09.2022 KR 20220111979
(71) Applicant: Samsung Electronics Co., Ltd., Suwon-si, Gyeonggi-do 16677 (KR)
(72) Inventor: MOON, Minjeong, Suwon-si Gyeonggi-do 16677 (KR); NAM, Myoungwoo, Suwon-si Gyeonggi-do 16677 (KR); PARK, Chanpyo, Suwon-si Gyeonggi-do 16677 (KR); LEE, Bona, Suwon-si Gyeonggi-do 16677 (KR); MOON, Minjung, Suwon-si Gyeonggi-do 16677 (KR); LEE, Seungyong, Suwon-si Gyeonggi-do 16677 (KR); JEON, Hayoung, Suwon-si Gyeonggi-do 16677 (KR)
(74) Representative: Nederlandsch Octrooibureau
(86) International application number: PCT/KR2023/010187
(87) International publication number: WO 2024/043532

(57) **Abstract**

An electronic device according to an embodiment may separate, on the basis of detecting a pair of gesture inputs individually starting from two edges of a display module and each reaching an adjacent edge, a target area corresponding to the pair of gesture inputs from a screen area of the display module. The electronic device may display, on the separated target area, an application screen adjusted on the basis of the separated target area, and display another screen in an area other than the separated target area.

## Description

### TECHNICAL FIELD

The following disclosure relates to screen display based on a gesture input.

### BACKGROUND ART

As display technology advances, a user terminal device with a flexible display has been introduced. The flexible display refers to a display device that may be bent. A glass substrate that encloses a liquid crystal in a typical liquid crystal display (LCD) and an organic light emitting diode (OLED) is replaced by a plastic film, and flexibility is provided to a display such that the display may be folded and unfolded. Since a plastic substrate is used for the flexible display instead of a generally used glass substrate, a low-temperature manufacturing processor may be used instead of a typical manufacturing processor to prevent damage to the plastic substrate.

The flexible display is thin and light and even strong against an impact. In addition, the flexible display may be curved or bent and manufactured in various shapes. The flexible display may be used especially in industrial fields in which application of typical glass substrate-based displays may be limited or impossible. As the flexible display is commercialized, a new interfacing scheme, or an information displaying scheme, to use a large screen of the flexible display is required.

### DISCLOSURE OF THE INVENTION

An electronic device according to an embodiment may include a display module, a memory configured to store computer-executable instructions, and a processor configured to execute the instructions by accessing the memory. When executed by the processor, the instructions cause the processor to perform the following operations. The operations may include splitting a target area corresponding to a pair of gesture inputs from a screen area of the display module based on detecting the pair of gesture inputs respectively starting from two edges of the display module and reaching adjacent edges. The operations may include displaying an application screen adjusted based on the split target area in the split target area. The operations may include displaying another screen in an area that is different from the split screen.

According to an embodiment, a method implemented by a processor may include splitting a target area corresponding to a pair of gesture inputs from a screen area of the display module based on detecting the pair of gesture inputs respectively starting from two edges of the display module and reaching adjacent edges. The method may include displaying an application screen adjusted based on the split target area in the split target area. The method may include displaying another screen in an area that is different from the split screen.

### BRIEF DESCRIPTION OF DRAWINGS

FIG. 1 is a block diagram of an electronic device in a network environment according to an embodiment.
FIG. 2A is a view illustrating an unfolded state of an electronic device according to an embodiment, and FIG. 2B is a view of a folded state of the electronic device according to an embodiment.
FIG. 3 is an exploded perspective view of an electronic device according to an embodiment.
FIGS. 4 and 5 are views illustrating a screen split operation based on a gesture according to an embodiment.
FIGS. 6 and 7 are views illustrating a screen reduction operation based on a gesture according to an embodiment.
FIGS. 8 and 9 are views illustrating an operation of displaying a pop-up screen on an area based on a registered trajectory according to an embodiment.
FIG. 10 is a view illustrating an example area based on a registered trajectory according to an embodiment.
FIG. 11 is a view illustrating registration of a trajectory according to an embodiment.
FIG. 12 is a view illustrating determination of a gesture based on an error range corresponding to a trajectory and correction of a registered trajectory according to an embodiment.
FIG. 13 is a view illustrating management of a registered trajectory for each user account according to an embodiment.

### BEST MODE FOR CARRYING OUT THE INVENTION

Hereinafter, embodiments will be described in detail with reference to the accompanying drawings. When describing the embodiments with reference to the accompanying drawings, like reference numerals refer to like components, and any repeated description related thereto will be omitted.

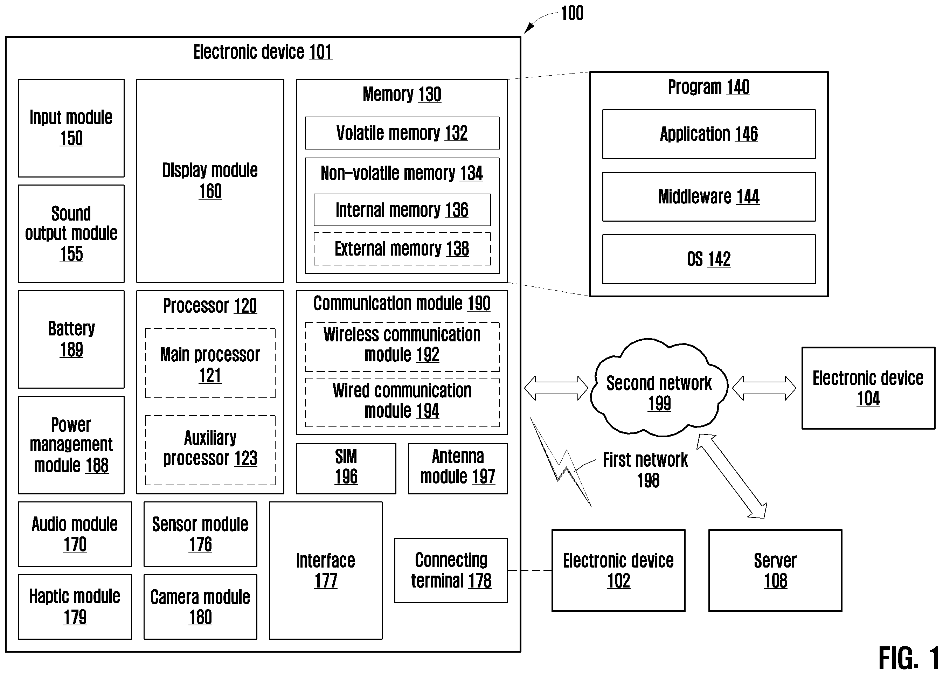

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the above components may be omitted from the electronic device 101, or one or more other components may be added to the electronic device 101. In some embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. An AI model may be generated through machine learning. Such learning may be performed by, for example, the electronic device 101 in which artificial intelligence is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The AI model may additionally or alternatively include a software structure other than the hardware structure.

The memory 130 may store various data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to sense a touch, or a pressure sensor adapted to measure an intensity of a force incurred by the touch.

The audio module 170 may convert a sound into an electrical signal or vice versa. According to an embodiment, the audio module 170 may obtain the sound via the input module 150 or output the sound via the sound output module 155 or an external electronic device (e.g., an electronic device 102 such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™} wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to an embodiment, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., a mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of the same type as or a different type from the electronic device 101. According to an embodiment, all or some of operations to be executed by the electronic device 101 may be executed at one or more external electronic devices (e.g., the external electronic devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and may transfer an outcome of the performing to the electronic device 101. The electronic device 101 may provide the result, with or without further processing the result, as at least part of a response to the request. To this end, cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., a smart home, a smart city, a smart car, or healthcare) based on 5G communication technology or IoT-related technology.

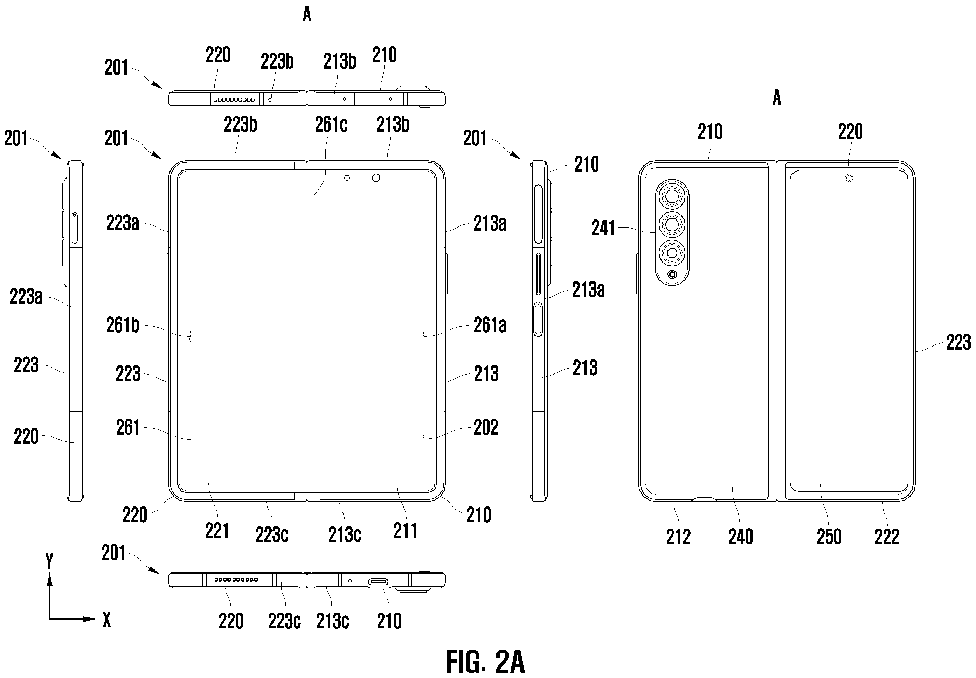

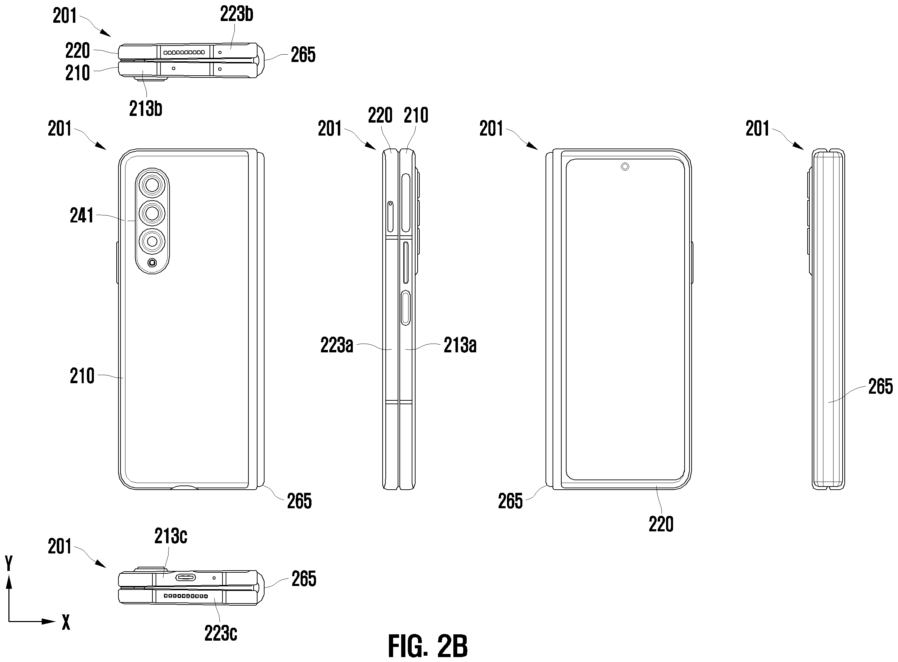

FIG. 2A is a view illustrating an unfolded state of an electronic device according to an embodiment, and FIG. 2B is a view of a folded state of the electronic device according to an embodiment.

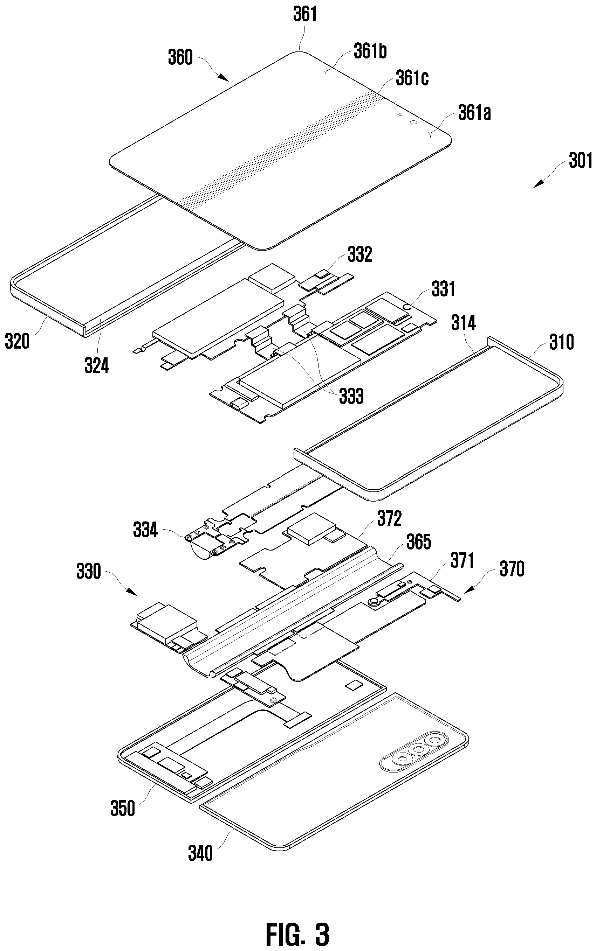

Referring to FIGS. 2A and 2B, an electronic device 201 may include a pair of housings 210 and 220 rotatably coupled to each other through a hinge structure (e.g., a hinge structure 334 of FIG. 3) to be folded with respect to each other, a hinge cover 265 for covering foldable portions of the pair of housings 210 and 220, and a display 261 (e.g., a flexible display or a foldable display) disposed in a space formed by the pair of housings 210 and 220. In the present disclosure, a surface on which the display 261 is disposed may be defined as a front surface of the foldable electronic device 201, and a surface opposite to the front surface may be defined as a rear surface of the foldable electronic device 201. The display 261 disposed on a front surface may be shown as a main display and a display disposed on a rear surface may be shown as a sub-display. The sub-display may be disposed on a second rear cover 250. In addition, a surface surrounding a space between the front surface and the rear surface may be defined as a side surface of the foldable electronic device 201.

In an embodiment, the foldable electronic device 201 may include the first housing 210, the second housing 220, a first rear cover 240, and the second rear cover 250. The pair of housings 210 and 220 of the electronic device 201 are not limited to the shapes or the combination and/or coupling of components shown in FIGS. 2A and 2B, and may be implemented in other shapes or by another combination and/or coupling of components.

In an embodiment, the first housing 210 and the second housing 220 may be disposed on both sides with respect to a folding axis A, and may be disposed substantially symmetrically with respect to the folding axis A. In an embodiment, an angle and/or a distance between the first housing 210 and the second housing 220 may vary depending on whether the electronic device 201 is in an unfolded state, a folded state, or an intermediate state. In an embodiment, the first housing 210 and the second housing 220 may have substantially symmetrical shapes.

In an embodiment, the first housing 210 may be connected to a hinge structure (e.g., the hinge structure 334 of FIG. 3) in the unfolded state of the electronic device 201. The first housing 210 may include a first surface 211 facing the front surface of the electronic device 201, a second surface 212 facing a direction opposite to the first surface 211, and a first side portion 213 enclosing at least a portion of a space between the first surface 211 and the second surface 212. The first side member 213 may include a first side surface 213a disposed substantially in parallel with the folding axis A, a second side surface 213b extending in a direction substantially perpendicular to the folding axis A from one end of the first side surface 213a, and a third side surface 213c extending in a direction substantially perpendicular to the folding axis A from another end of the first side surface 213a and substantially parallel to the second side surface 213b. The second housing 220 may be connected to a hinge structure (e.g., the hinge structure 334 of FIG. 3) in the unfolded state of the electronic device 201. The second housing 220 may include a third surface 221 facing the front surface of the electronic device 201, a fourth surface 222 facing a direction opposite to the third surface 221, and a second side portion 223 enclosing at least a portion of a space between the third surface 221 and the fourth surface 222. The second side member 223 may include a fourth side surface 223a disposed substantially in parallel with the folding axis A, a fifth side surface 223b extending in a direction substantially perpendicular to the folding axis A from one end of the fourth side surface 223a, and a sixth side surface 223c extending in a direction substantially perpendicular to the folding axis A from another end of the fourth side surface 223a and substantially parallel to the fifth side surface 223b. The first surface 211 and the third surface 221 may face each other when the electronic device 201 is in the folded state.

In an embodiment, the electronic device 201 may include at least one sound output module (e.g., the sound output module 155 of FIG. 1) disposed on the fifth side surface 223b and/or the sixth side surface 223c of the second housing 220.

In an embodiment, the electronic device 201 may include a recessed accommodating portion 202 for accommodating the display 261 through the structural coupling of the first housing 210 and the second housing 220. The accommodating portion 202 may have substantially the same size as the display 261.

In an embodiment, at least a portion of the first housing 210 and the second housing 220 may be formed of a metal material or a non-metal material having a predetermined magnitude of rigidity appropriate to support the display 261.

In an embodiment, the electronic device 201 may include at least one component disposed to be exposed on the front surface of the electronic device 201 to perform various functions. For example, the component may include at least one of a front camera module, a receiver, a proximity sensor, an illuminance sensor, an iris recognition sensor, an ultrasonic sensor, or an indicator.

In an embodiment, the first rear cover 240 may be disposed on the second surface 212 of the first housing 210, and may have a substantially rectangular periphery. At least a portion of the periphery of the first rear cover 240 may be surrounded by the first housing 210. The second rear cover 250 may be disposed on the fourth surface 222 of the second housing 220, and may have a substantially rectangular periphery. At least a portion of the periphery of the second rear cover 250 may be surrounded by the second housing 220.

In an embodiment, the first rear cover 240 and the second rear cover 250 may have substantially symmetrical shapes with respect to the folding axis A. In another embodiment, the first rear cover 240 and the second rear cover 250 may have different shapes.

In an embodiment, the first housing 210 and the first rear cover 240 may be detachably connected, coupled, or joined to each other and the second housing 220 and the second rear cover 250 may be detachably connected, coupled, or joined to each other. In another embodiment, the first housing 210 and the first rear cover 240 may be integrally formed, and the second housing 220 and the second rear cover 250 may be integrally formed.

In an embodiment, the first housing 210, the second housing 220, the first rear cover 240, and the second rear cover 250 may provide a space in which various components (e.g., a PCB, the antenna module 197 of FIG. 1, the sensor module 176 of FIG. 1, or the battery 189 of FIG. 1) of the electronic device 201 may be arranged through a structure in which the first housing 210, the second housing 220, the first rear cover 240, and the second rear cover 250 are coupled to one another. In an embodiment, at least one component may be visually exposed on the rear surface of the electronic device 201. For example, at least one component may be visually exposed through a first rear area 241 of the first rear cover 240. Here, the component may include a proximity sensor, a rear camera module, and/or a flash.

In an embodiment, the display 261 may be disposed in the accommodating portion 202 formed by the pair of housings 210 and 220. For example, the display 261 may be arranged to occupy substantially most of the front surface of the electronic device 201. The front surface of the electronic device 201 may include an area in which the display 261 is disposed, and a partial area (e.g., an edge area) of the first housing 210 and a partial area (e.g., an edge area) of the second housing 220, which are adjacent to the display 261. The rear surface of the electronic device 201 may include the first rear cover 240, a partial area (e.g., a periphery area) of the first housing 210 adjacent to the first rear cover 240, the second rear cover 250, and a partial area (e.g., a periphery area) of the second housing 220 adjacent to the second rear cover 250. In an embodiment, the display 261 may be a display in which at least one area is deformable into a planar surface or a curved surface. In an embodiment, the display 261 may include a flexible area 261c, a first area 261a on a first side (e.g., the right side) of the flexible area 261c, and a second area 261b on a second side (e.g., the left side) of the flexible area 261c. For example, the first area 261a may be disposed in the first surface 211 of the first housing 210, and the second area 261b may be disposed in the third surface 221 of the second housing 210. However, the area division of the display 261 is merely an example, and the display 261 may be divided into a plurality of areas depending on the structure or functions of the display 261. For example, as shown in FIG. 2A, the display 261 may be divided into areas based on the folding axis A or the flexible area 261c extending in parallel to a Y-axis, or the display 261 may be divided into areas based on another folding area (e.g., a folding area extending in parallel to an X-axis) or another folding axis (e.g., a folding axis parallel to the X-axis). The area division of the display 261 as above is merely a physical division based on the pair of housings 210 and 220 and the hinge structure (e.g., the hinge structure 334 of FIG. 3), and the display 261 may display substantially one screen through the pair of housings 210 and 220 and the hinge structure (e.g., the hinge structure 334 of FIG. 3). In an embodiment, the first area 261a and the second area 261b may have substantially symmetrical shapes with respect to the flexible area 261c.

In an embodiment, the hinge cover 265 may be disposed between the first housing 210 and the second housing 220 and configured to cover the hinge structure (e.g., the hinge structure 334 of FIG. 3). The hinge cover 265 may be hidden by at least a portion of the first housing 210 and the second housing 220 or exposed to the outside according to the operating state of the electronic device 201. For example, when the electronic device 201 is in an unfolded state as shown in FIG. 2A, the hinge cover 265 may be hidden by the first housing 210 and the second housing 220 and not exposed to the outside, and when the electronic device 201 is in a folded state as shown in FIG. 2B, the hinge cover 265 may be exposed to the outside between the first housing 210 and the second housing 220. Meanwhile, when the electronic device 201 is in an intermediate state in which the first housing 210 and the second housing 220 form an angle with each other, at least a portion of the hinge cover 265 may be exposed to the outside between the first housing 210 and the second housing 220. In this case, an area of the hinge cover 265 exposed to the outside may be smaller than the area of the hinge cover 265 exposed when the electronic device 201 is in the folded state. In an embodiment, the hinge cover 265 may have curved surfaces.

Describing the operation of the electronic device 201 according to an embodiment, when the electronic device 201 is in an unfolded state (e.g., the state of the electronic device 201 of FIG. 2A), the first housing 210 and the second housing 220 may form a first angle (e.g., about 180 degrees) with each other, and the first area 261a and the second area 261b of the display 261 may be oriented in substantially the same direction. The flexible area 261c of the display 261 may be on substantially the same plane as the first area 261a and the second area 261b. In another embodiment, when the electronic device 201 is in the unfolded state, as the first housing 210 rotates at a second angle (e.g., about 360 degrees) relative to the second housing 220, the second surface 212 and the fourth surface 222 may face each other. Meanwhile, when the electronic device 201 is in the folded state (e.g., the state of the electronic device 201 of FIG. 2B), the first housing 210 and the second housing 220 may face each other. The first housing 210 and the second housing 220 may form an angle of about 0 degrees to about 10 degrees, and the first area 261a and the second area 261b of the display 261 may face each other. At least a portion of the flexible area 261c of the display 261 may be deformed into a curved surface. Meanwhile, when the electronic device 201 is in the intermediate state, the first housing 210 and the second housing 220 may form a predetermined angle with each other. An angle (e.g., a third angle, about 90 degrees) formed by the first area 261a and the second area 261b of the display 261 may be greater than that when the electronic device 201 is in the folded state and less than that when the electronic device 201 is in the unfolded state. At least a portion of the flexible area 261c of the display 261 may be deformed into a curved surface. In this case, a curvature of the curved surface of the flexible area 261c may be smaller than a curvature of the curved surface of the flexible area 261c when the electronic device 201 is in the folded state.

Meanwhile, the embodiments of the electronic device described herein are not limited to a form factor of the electronic device 201 described with reference to FIGS. 2A and 2B, and may also apply to electronic devices with various form factors.

FIG. 3 is an exploded perspective view of an electronic device according to an embodiment.

Referring to FIG. 3, an electronic device 301 according to an embodiment may include a display module 360 (e.g., the display module 160 of FIG. 1), a hinge assembly 330, a substrate 370, a first housing 310 (e.g., the first housing 210 of FIGS. 2A and 2B), a second housing 320 (e.g., the second housing 220 of FIGS. 2A and 2B), a first rear cover 340 (e.g., the first rear cover 240 of FIGS. 2A and 2B), and a second rear cover 350 (e.g., the second rear cover 250 of FIGS. 2A and 2B).

The display module 360 may include a display 361 (e.g., the display 261 of FIGS. 2A and 2B) and at least one layer or plate 362 on which the display 361 is seated. In an embodiment, the plate 362 may be disposed between the display 361 and the hinge assembly 330. The display 361 may be disposed on at least a portion of one surface (e.g., a top surface) of the plate 362. The plate 362 may be formed in a shape corresponding to the display 361.

The hinge assembly 330 may include a first bracket 331, a second bracket 332, a hinge structure 334 disposed between the first bracket 331 and the second bracket 332, a hinge cover 365 for covering the hinge structure 334 when the hinge structure 334 is viewed from the outside, and a PCB 333 that traverses the first bracket 331 and the second bracket 332. In an embodiment, the PCB 333 may be a flexible PCB (FPCB).

In an embodiment, the hinge assembly 330 may be arranged between the plate 362 and the substrate 370. For example, the first bracket 331 may be disposed between a first area 361a of the display 361 and a first substrate 371. The second bracket 332 may be disposed between a second area 361b of the display 361 and a second substrate 372.

In an embodiment, at least a portion of the hinge structure 334 and the PCB 333 may be disposed inside the hinge assembly 330. The PCB 333 may be disposed in a direction (e.g., the X-axis direction) that traverses the first bracket 331 and the second bracket 332. The PCB 333 may be disposed in a direction (e.g., the X-axis direction) perpendicular to a folding axis (e.g., the Y-axis or the folding axis A of FIG. 2A) of a flexible area 361c of the electronic device 301.

The substrate 370 may include the first substrate 371 disposed on the first bracket 331 and the second substrate 372 disposed on the second bracket 332. The first substrate 371 and the second substrate 372 may be disposed in a space formed by the hinge assembly 330, the first housing 310, the second housing 320, the first rear cover 340, and the second rear cover 350. Components for implementing various functions of the electronic device 301 may be disposed on the first substrate 371 and the second substrate 372.

The first housing 310 and the second housing 320 may be assembled together to be coupled to both sides of the hinge assembly 330 in a state in which the display module 360 is coupled to the hinge assembly 330.

In an embodiment, the first housing 310 may include a first rotation support surface 314, and the second housing 320 may include a second rotation support surface 324 corresponding to the first rotation support surface 314. The first rotation support surface 314 and the second rotation support surface 324 may include curved surfaces corresponding to the curved surfaces included in the hinge cover 365.

In an embodiment, when the electronic device 301 is in the unfolded state (e.g., the electronic device 201 of FIG. 2A), as the first rotation support surface 314 and the second rotation support surface 324 cover the hinge cover 365, the hinge cover 365 may not be exposed through the rear surface of the electronic device 301 or may be minimally exposed. Meanwhile, when the electronic device 301 is in a folded state (e.g., the electronic device 201 of FIG. 2B), the first rotation support surface 314 and the second rotation support surface 324 may rotate along the curved surfaces included in the hinge cover 365 such that the hinge cover 365 may be maximally exposed through the rear surface of the electronic device 301.

The electronic device according to embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things unless the relevant context clearly indicates otherwise. As used herein, "A or B", "at least one of A and B", "at least one of A or B", "A, B or C", "at least one of A, B and C", and "A, B, or C," each of which may include any one of the items listed together in the corresponding one of the phrases, or all possible combinations thereof. Terms such as "first", "second", or "first" or "second" may simply be used to distinguish the component from other components in question, and may refer to components in other aspects (e.g., importance or order) is not limited. It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in the form of an application-specific integrated circuit (ASIC).

Embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, according to embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more of other operations may be added.

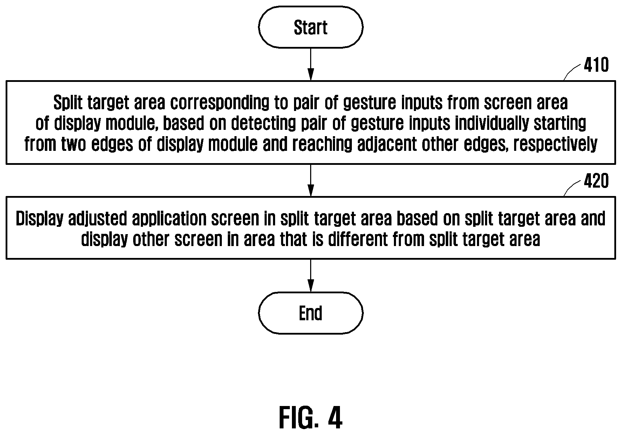

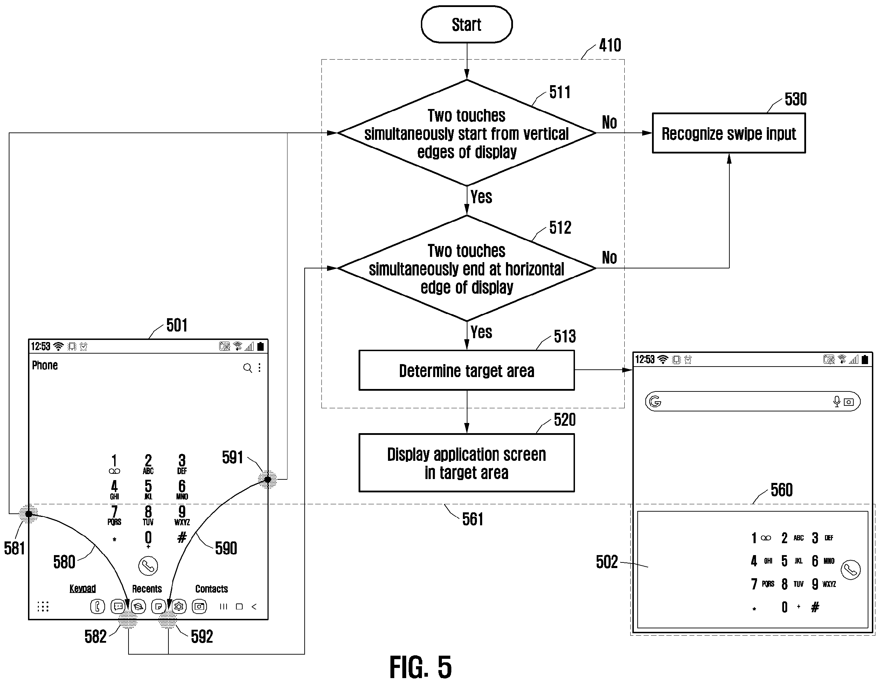

FIGS. 4 and 5 are views illustrating a screen split operation based on a gesture according to an embodiment.

FIG. 4 is a flowchart illustrating a screen split operation based on a pair of gesture inputs according to an embodiment.

In operation 410, in response to detecting a pair of gesture inputs individually starting from two edges of a display module and reaching adjacent edges, respectively, an electronic device (e.g., the electronic device 101 of FIG. 1) may split a screen area of the display module into a target area corresponding to the pair of gesture inputs. The edge of the display module may represent an area corresponding to a boundary of the screen area of the display module and an area including the boundary and may be referred to as an edge area. For example, the screen area may be substantially rectangular and may include opposing edges (e.g., vertical edges and horizontal edges).

As described below, a first gesture input of the pair of gesture inputs may start from the vertical edge and may reach the vertical edge at the bottom of the screen area. A second gesture input may start from another vertical edge facing the vertical edge from which the first gesture input starts and may reach the same horizontal edge. For example, the first gesture input and the second gesture input may each have a trajectory corresponding to a substantially arc shape, but the trajectory shape of each gesture input is not limited thereto. The first gesture input and the second gesture input may be gestures individually input by thumbs of both hands of a user, and for example, the first gesture input may be input by a left thumb and the second gesture input may be input by a right thumb.

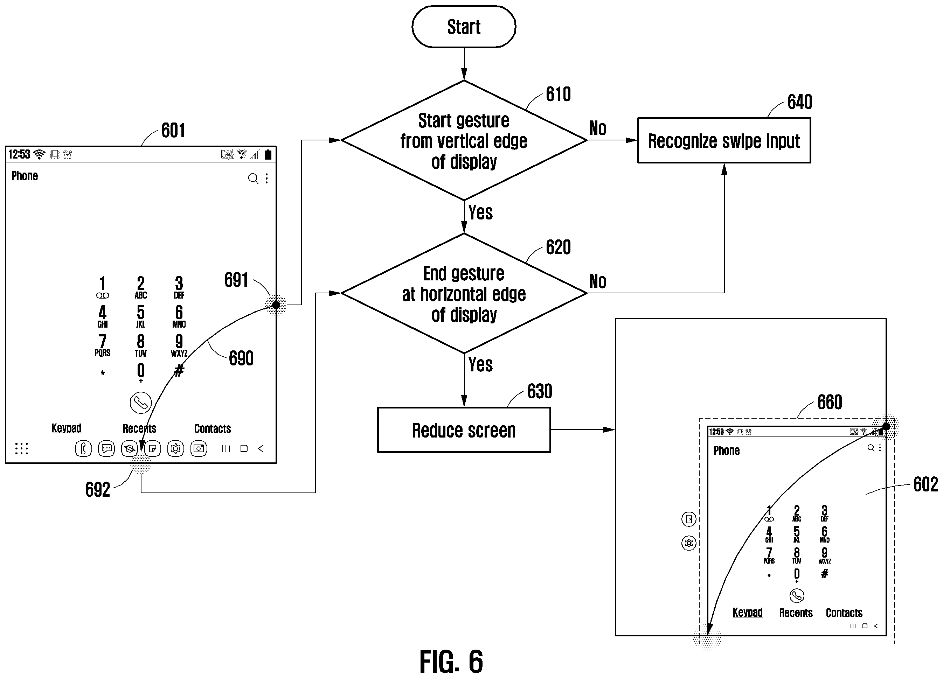

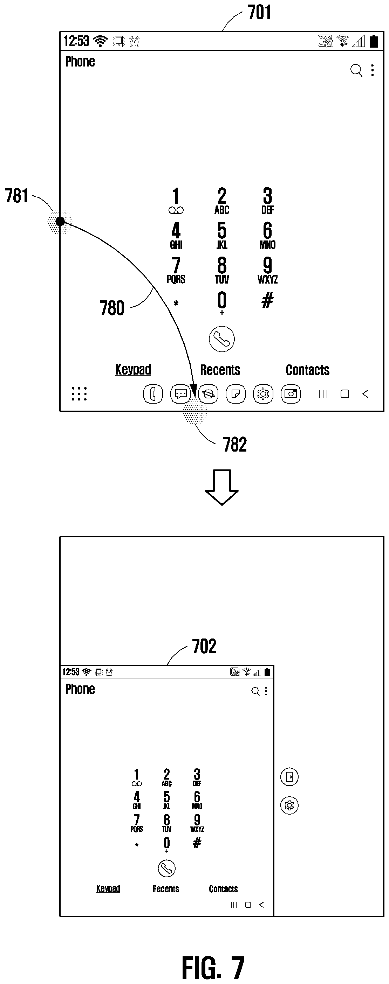

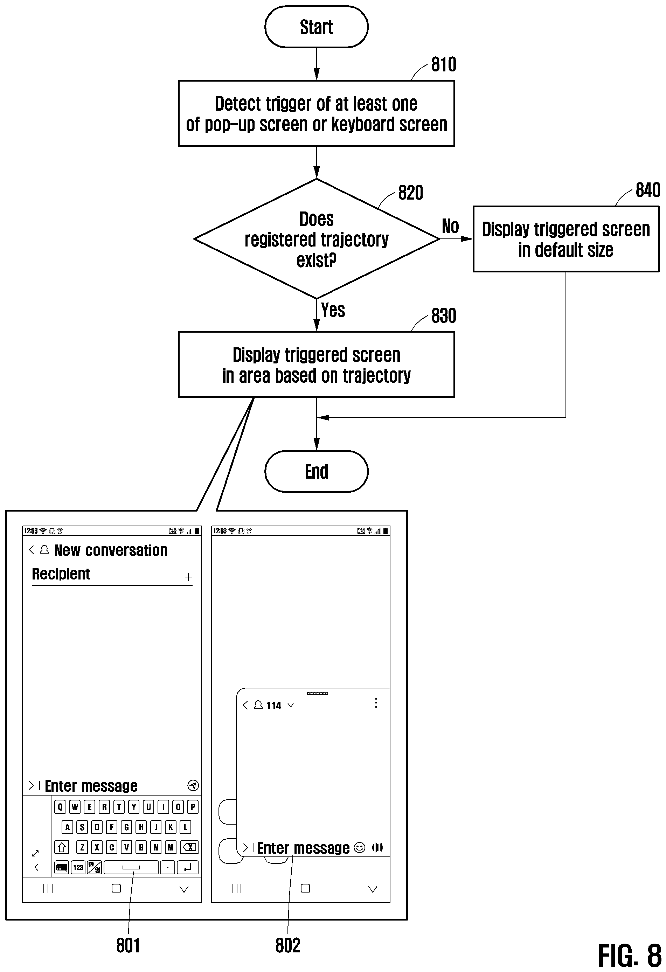

The target area may be an area in which an application screen is displayed and which is subjected to manipulation, and at least one of a size and a shape of the target area may be determined based on a gesture input. For example, the electronic device may determine the size of the target area based on points in which the pair of gesture inputs is in contact with the edges of the display module. However, the example is not limited thereto, and in examples of FIGS. 6 and 7, the target area may be determined based on one gesture input, and in examples of FIGS. 8 to 10, the target area may be determined based on a registered trajectory.

In operation 420, the electronic device may display an application screen, which is adjusted based on a split target area, in the split target area and may display another screen in an area that is different from the split target area. For example, the electronic device may output a screen (e.g., the application screen) of a currently executing application in the target area. The electronic device may display an application screen obtained by adjusting a default screen of an application in the target area. The electronic device may adjust at least one of a size, a shape, or a layout (e.g., an arrangement of a graphic object or a manipulation object) of the application screen based on the target area. For example, the electronic device may fit the application screen to the target area to include a graphic object and a manipulation object, which are provided by the default screen of the application, in the target area. The default screen of the application may represent a screen in which an application is displayed in a screen area (e.g., a screen area of the display module before split). The electronic device may output a home screen in a different area (e.g., a remaining area other than the target area in the screen area of the display module).

As described above, the electronic device may output the application screen in the target screen in response to the pair of gesture inputs while maintaining the output of another screen in the different area. Furthermore, the electronic device may allow an additional input of the user in the different area. For example, the electronic device may output an icon object that triggers execution of another application in the different area. In response to detecting a user input for selecting the icon object, the electronic device may output an application corresponding to the selected icon object in the target area. The electronic device may maintain the split target area in the screen area of the display module while changing the application displayed in the target area.

FIG. 5 illustrates an example of a pair of gesture inputs and an example of determining a size of a target area in a screen split according to an embodiment.

As described above, in operation 410, the electronic device (e.g., the electronic device 101 of FIG. 1) may detect a pair of gesture inputs and may determine a target area 560 based on the detected gesture input. The electronic device may detect a pair of gesture inputs in contact with first edges (e.g., vertical edges) and a second edge (e.g., a horizontal edge) in the screen area of the display module. Each of the gesture inputs may be an input by a thumb of a corresponding hand of both hands of a user.

According to an embodiment, the electronic device may detect, as the pair of gesture input, gesture inputs individually starting from edges facing each other and reaching the same edge.

For example, in operation 511, the electronic device may determine whether two touches (e.g., a pair of touches) simultaneously start from vertical edges of a display (e.g., the display module). For example, the electronic device may determine whether a difference between start times of the pair of gesture inputs (e.g., a first gesture input 580 and a second gesture input 590) is less than or equal to a threshold time. The start time may represent a time point at which a gesture input that draws the trajectory is in contact with an edge (e.g., the first edge or the second edge). The electronic device may determine that the first gesture input 580 and the second gesture input 590 simultaneously start from corresponding edges (e.g., individually corresponding vertical edges), based on that a time difference between a start time of the first gesture input 580 and a start time of the second gesture input 590 is less than or equal to the threshold time.

The electronic device may determine whether the two touches reach the horizontal edge at the same time based on the determination that the two touches simultaneously start from the vertical edges. In operation 512, the electronic device may determine whether the two touches end at the vertical edge at the same time. For example, the electronic device may determine whether a difference between end times of the pair of gesture inputs is less than or equal to the threshold time. The end time may represent a time point at which a gesture input that draws the trajectory releases the contact at the edge. The electronic device may determine that the first gesture input 580 and the second gesture input 590 end at the same time at corresponding edges (e.g., the horizontal edges) based on that the time difference between the end time of the first gesture input 580 and the end time of the second gesture input 590 is less than or equal to the threshold time.

In operation 530, the electronic device may determine that the pair of gestures is a swipe input based on that at least one of the difference between the start times or the difference between the end times of the pair of gestures exceeds the threshold time. For example, the electronic device may determine that the two touches are a swipe input based on that the two touches do not simultaneously start from the vertical edges. The electronic device may determine that the two touches are a swipe input based on that the two touches do not simultaneously reach the horizontal edge. The electronic device may determine a swipe direction based on the trajectory of the two touches. For example, the electronic device may determine the swipe direction based on a partial trajectory of the gesture input. The electronic device may determine the swipe direction to be a direction (e.g., a direction from top to bottom) corresponding to a partial trajectory based on that the partial trajectory (e.g., a trajectory near the vertical edge when the touch heads toward the horizontal edge from the vertical edge) near a point in which the gesture input ends.

In operation 513, the electronic device may determine the target area 560. For example, the electronic device may split the target area 560 from the screen area of the display module based on that the difference between the start times and the difference between the end times of the pair of gestures are less than or equal to the threshold time. The electronic device may determine the size of the target area 560 based on points in which the pair of gesture inputs is in contact with edges of the display module facing each other. For example, in the example of FIG. 5, the electronic device may detect, as the first gesture input 580, a touch trajectory moving to a second point 582 from a first point 581 of one side edge (e.g., a left edge) of a screen area 501. The electronic device may detect, as the second gesture input 590, a touch trajectory moving to a fourth point 592 from a third point 591 of the other side edge (e.g., a right edge) of the screen area 501. The one side edge and the other side edge may be edges facing each other. The electronic device may determine the size of the target area 560 based on the first point 581 of the one side edge and the third point 591 of the other side edge. For example, the electronic device may determine an axis length (e.g., a vertical height 561) of the target area 560 based on an axis length (e.g., the vertical height) corresponding to the first point 581 and an axis length of the third point 591 of the other side edge in the screen area. The electronic device may determine another axis length (e.g., a horizontal width) of the target area 560 to be another axis (e.g., the horizontal width) of the screen area of the display module. The electronic device may set the target area 560 to include a space between the second point 582 and the fourth point 592 even if the second point 582 and the fourth point 592 are spaced apart from each other.

In operation 520, the electronic device may display an application screen 502 in the target area 560 based on the determination of the target area 560 corresponding to the pair of gesture inputs. The electronic device may display the application screen 502 adjusted to fit the determined target area 560. In the example of FIG. 5, the electronic device may display the application screen 502 in a layout in which a keypad object and a call object of a phone application are disposed in a right area in the target area 560.

In addition, the electronic device may display another executed application in the target area 560 based on that the other application is executed during the screen split based on the pair of gestures. The electronic device may terminate the screen split in response to detecting a pair of additional gestures starting from two edges of the display module and reaching adjacent edges during the screen split based on the pair of gestures.

For reference, the present disclosure mainly describes a gesture input that forms contact at a first edge (e.g., the vertical edge), moves from the first edge to a second edge (e.g., the horizontal edge) while maintaining the formed contact, and releases the contact at the second edge. However, the example is not limited thereto. Conversely, the gesture input may be an input that draws a trajectory moving from the second edge to the first edge. A trajectory direction of the pair of gestures may be opposite to a trajectory direction of the pair of additional gestures. For example, the electronic device may perform a split of the target screen based on the pair of gesture inputs having a trajectory (e.g., a trajectory moving from the second edge to the first edge) from bottom to top using both thumbs. The electronic device may terminate split of the target screen based on the pair of additional gesture inputs having a trajectory (e.g., a trajectory moving from the first edge to the second edge) from top to bottom using both thumbs.

In addition, an example in which the trajectory drawn by the gesture input has a substantially arc shape is mainly described. When both thumbs move while forming touch contacts and the other fingers grip the electronic device, a tip of the thumb may move while drawing an arc shape due to a joint structure of the thumb. However, the example is not limited thereto and the trajectory due to the gesture input may have a different shape (e.g., a straight shape from the first edge or the second edge to the other edge).

FIGS. 6 and 7 are views illustrating a screen reduction operation based on a gesture according to an embodiment.

FIG. 6 illustrates an operation based on a gesture input 690 using a thumb.

An electronic device (e.g., the electronic device 101 of FIG. 1) according to an embodiment may output an application screen 602 reduced based on a size corresponding to a trajectory based on detecting the gesture input 690 of the trajectory starting from one edge (e.g., the vertical edge) of a display module and reaching an adjacent edge (e.g., the horizontal edge).

For example, in operation 610, the electronic device may determine whether the gesture starts from the vertical edge of the display. In operation 640, based on an input of a gesture from a portion other than the edge in the display, the electronic device may determine that the input is a swipe input.

In operation 620, the electronic device may determine whether the gesture ends at the horizontal edge of the display. Based on that the gesture ends at a portion other than the horizontal edge, in operation 640, the electronic device may determine that the input is a swipe input.

In operation 630, the electronic device may reduce the screen based on that the gesture input 690 starts from the vertical edge and ends at the horizontal edge. For example, the electronic device may determine a target area 660 based on a first point 691 in which the gesture input 690 ends on the edge in operation 610 and a second point 692 in which the gesture input 690 is released on the other edge in operation 620. The electronic device may split a screen area 601 of the display module into the target area 660 having a height corresponding to the first point 691 and a width corresponding to the second point 692. The electronic device may display the reduced application screen 602 in the target area 660. For reference, in FIG. 6, the application screen 602 is reduced while maintaining a layout of objects of the application screen 602. However, the example is not limited thereto. The electronic device may change a layout of the application screen 602 based on the target area 660 and may output the application screen 602 having the changed layout in the target area.

According to an embodiment, the electronic device may position the target area 660 based on adjacent edges corresponding to the start point and end point of the gesture input 690. For example, in the example of FIG. 6, the electronic device may position the target area 660 at a corner (e.g., a bottom right corner) in which the right edge and the bottom edge intersect, based on detecting the gesture input 690 starting from the right edge and reaching the bottom edge. Conversely, in FIG. 7, a gesture input 780 from a first point 781 on a left edge to a second point 782 on a bottom edge may be detected. The electronic device may position the target area at a corner (e.g., a left bottom corner) in which the left edge and the bottom edge intersect, based on the gesture input 780. The electronic device may output a reduced application screen 702 in a target area split from a screen area 701.

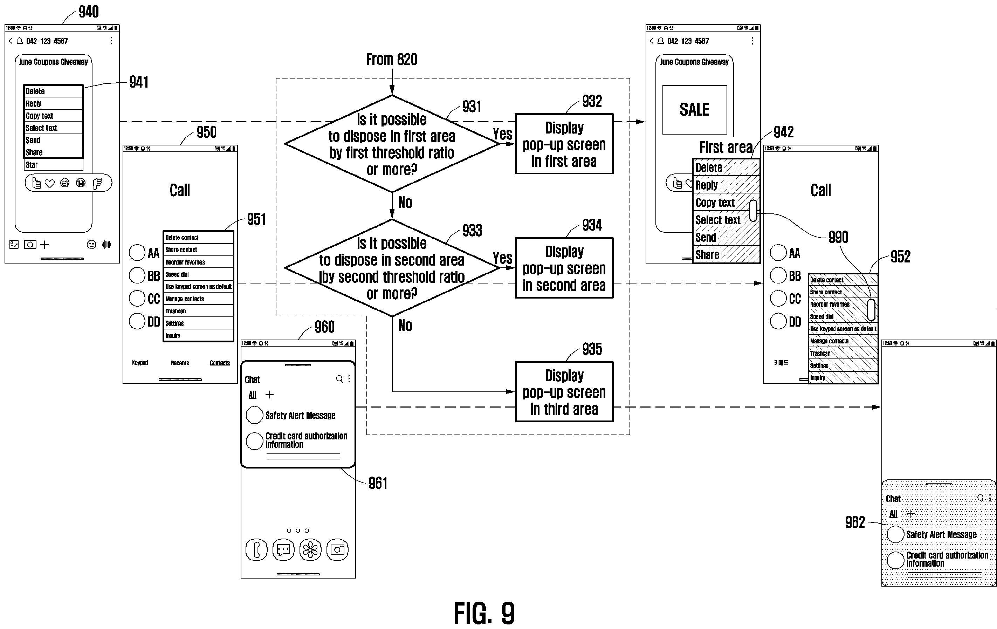

FIGS. 8 and 9 are views illustrating an operation of displaying a pop-up screen on an area based on a registered trajectory according to an embodiment.

FIG. 8 illustrates an operation of outputting a called pop-up screen 802 or a keyboard screen 801 in an area (e.g., a target area) based on a trajectory.

Based on that a trajectory is pre-registered before triggering at least one of the pop-up screen 802 or the keyboard screen 801, an electronic device (e.g., the electronic device 101 of FIG. 1) according to an embodiment may determine an area to output a triggered screen based on comparison between a plurality of areas based on the pre-registered trajectory and the triggered screen.

For example, in operation 810, the electronic device may detect triggering of at least one of the pop-up screen 802 or the keyboard screen 801. The pop-up screen 802 may represent a pop-up screen while overlaying a screen area of a display module. For example, the electronic device may trigger the display of the pop-up screen 802 based on a predetermined input (e.g., a long tap input for selecting an object for a threshold time or more) for an object in a home screen and/or an application screen. The keyboard screen 801 may represent a screen having a graphical user interface (GUI) for receiving a string input from a user. For example, the electronic device may trigger the display of the keyboard screen 801 in a partial area (e.g., a bottom area) of the screen area based on execution of an application that requires a string input by the user and/or selection of an object (e.g., a text input field).

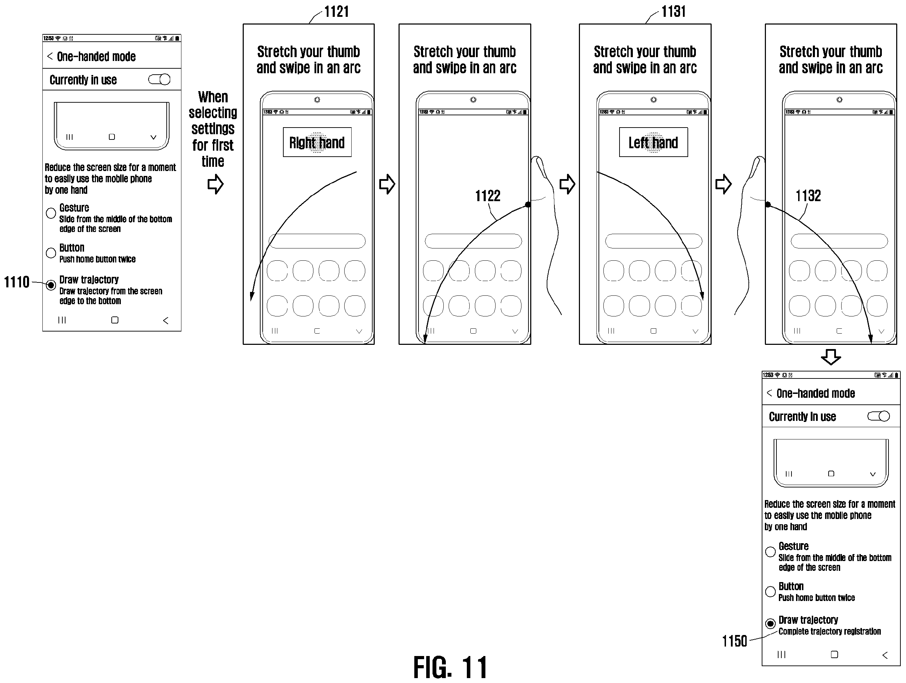

In operation 820, the electronic device may determine whether a registered trajectory exists. The trajectory may be a trajectory drawn by the above-described gesture input moving from one edge to another adjacent edge, and registration of the trajectory is described with reference to FIG. 11 below. In operation 840, the electronic device may display the triggered screen in a default size based on that the registered trajectory does not exist. For example, when the pop-up screen 802 is triggered, the electronic device may display the pop-up screen 802 in the default size. In another example, when the keyboard screen 801 is triggered, the electronic device may display the keyboard screen 801 in the default size.

In operation 830, the electronic device may display the triggered screen in an area (e.g., the target area) based on the trajectory based on that the registered trajectory exists. For example, a trajectory based on a gesture moving from the right vertical edge to the bottom horizontal edge may be pre-registered. The electronic device may display the keyboard screen 801 in the target area adjacent to the right vertical edge. In another example, the electronic device may display the pop-up screen 802 in the target area adjacent to the right vertical edge. A portion corresponding to the target area in the keyboard screen 801 and/or the pop-up screen 802 may be exposed and exposure of the other portion may be limited. In addition, when trajectories are pre-registered for both the edges (e.g., the left vertical edge and the right vertical edge) facing each other, a position to output the triggered screen may be set by the user.

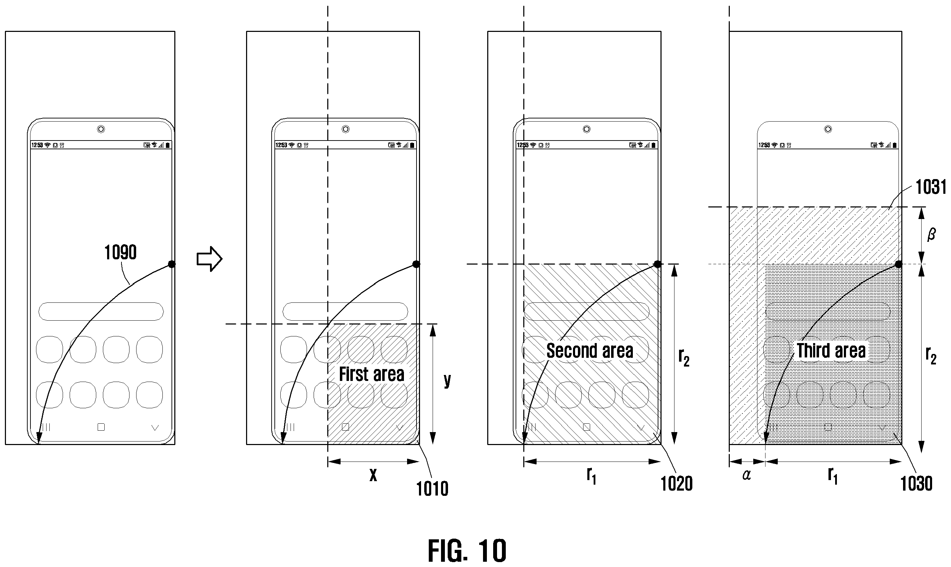

For reference, the area (e.g., the target area) based on the trajectory may include areas having different sizes. FIGS. 9 and 10 below describe examples of a plurality of areas based on the trajectory.

FIG. 9 illustrates an example of displaying a pop-up screen for a plurality of areas based on a pre-registered trajectory.

In the example of FIG. 9, three areas (e.g., a first area, a second area, and a third area) based on pre-registered trajectories are illustrated.

An electronic device (e.g., the electronic device 101 of FIG. 1) according to an embodiment may select an area to output a pop-up screen in the plurality of areas based on a ratio of including the pop-up screen in each of the plurality of areas based on the registered trajectory.

For example, in operation 931, the electronic device may determine whether a triggered screen (e.g., the pop-up screen) may be disposed in the first area by a first threshold ratio or more. In operation 932, if a ratio of the pop-up screen included in the first area is greater than or equal to the first threshold ratio when aligning the first area and the pop-up screen, the electronic device may display the pop-up screen on the first screen. A first pop-up screen 941 of a screen area 940 shown in FIG. 9 may be displayed in a first area 942. The electronic device may compare a next area (e.g., an area larger than the first area) with the pop-up screen based on that the ratio of the pop-up screen included in the first area is less than the first threshold ratio.

In operation 933, the electronic device may determine whether a triggered screen may be disposed in a second area by a second threshold ratio or more. In operation 934, if a ratio of the pop-up screen included in the second area is greater than or equal to the second threshold ratio when aligning the second area and the pop-up screen, the electronic device may display the pop-up screen on the second screen. A second pop-up screen 951 of a screen area 950 shown in FIG. 9 may be displayed in a second area 952.

In operation 935, the electronic device may display a pop-up screen in a third area. For example, based on that a ratio of the pop-up screen included in the second area is less than the second threshold ratio, the electronic device may output the pop-up screen in the third area. A third pop-up screen 961 of a screen area 960 shown in FIG. 9 may be displayed in a third area 962.

In addition, the electronic device may output a portion of the pop-up screen in a selected area based on that the pop-up screen is larger than the selected area from the plurality of areas based on the registered trajectory. The electronic device may expose the other portion of the pop-up screen in response to an additional manipulation of the user. For example, in response to a scroll input for the selected area, the electronic device may expose an occluded portion of the pop-up screen in the selected area. As shown in FIG. 9, the electronic device may output, in the selected, an object (e.g., a scroll bar 990) indicating a position of a currently exposed portion (e.g., content of the pop-up screen) in the selected area.

FIG. 10 is a view illustrating an example area based on a registered trajectory according to an embodiment.

As described above, an electronic device (e.g., the electronic device 101 of FIG. 1) according to an embodiment may output a pop-up screen in one of a plurality of areas based on a registered trajectory 1090. The plurality of areas described above may include at least two of a first area 1010, a second area 1020, or a third area 1030.

The first area 1010 may be an area inscribed to the pre-registered trajectory 1090. For example, the first area 1010 may be an area easily controllable by a thumb of the user, and may have an area of a horizontal length x × a vertical length y. In this case, x may represent a length that is shorter than one side length (e.g., the horizontal length) and y may represent a length that is shorter than the other side length (e.g., the vertical length). Without extension of the thumb while the user maintains a posture of gripping the electronic device, the user may reach a tip of the thumb to points in the first area 1010.

The second area 1020 may be an area circumscribed to the pre-registered trajectory 1090. For example, the second area 1020 may be an area requiring a little effort of the user to control by one hand and may have an area of a horizontal length r₁ × a vertical length r₂. In this case, r₁ may represent a length corresponding to a point in which the registered trajectory 1090 intersects the horizontal edge and r₂ may represent a length corresponding to a point in which the registered trajectory 1090 intersects the vertical edge. The user may partially modify the posture to grip the electronic device and may reach the tip of the thumb to outer points in the second area 1020.

The third area 1030 may be an area reflecting a margin 1031 in the pre-registered trajectory 1090. For example, the third area 1030 may be a maximum area controllable by one hand and may have an area of a horizontal length (r₁+α) × a vertical length (r₂+β). For example, coefficients α and β corresponding to the margin 1031 may be about 1/4 of the length from a wrist to the tip of the thumb. According to Korean statistics, the average length from the wrist to the tip of the thumb of a Korean is 110 mm to 120 mm, the coefficients α and β may be determined to be approximately 3 cm (= 120 mm/4). However, the example is not limited thereto, and the coefficients α and β may be set based on a body length (e.g., the length from the wrist to the tip of the thumb) of an individual user.

FIG. 11 is a view illustrating registration of a trajectory according to an embodiment.

An electronic device (e.g., the electronic device 101 of FIG. 1) according to an embodiment may perform trajectory registration for one-handed manipulation through a setup screen. However, the example is not limited thereto and the electronic device may seamlessly and automatically register a trajectory corresponding to an initial gesture input from an edge to an adjacent edge.

For example, the electronic device may enter a setup screen for trajectory registration based on a user input to select an object 1110. The electronic device may output guide information for drawing a trajectory (e.g., an arc shape) using a thumb of a hand (e.g., a right hand) of the user. The electronic device may detect a trajectory 1122 by the thumb of the corresponding hand from the user. The electronic device may register the detected trajectory 1122. The electronic device may output guide information 1131 for drawing the trajectory using the thumb of the other hand (e.g., the left hand) of the user. The electronic device may detect a trajectory 1132 by the thumb of the corresponding hand from the user. The electronic device may register the detected trajectory 1132.

For reference, in FIG. 11, an example of receiving the trajectories 1122 and 1132 for the user's hand in a sub-display is illustrated, but the example is not limited thereto. The electronic device may receive inputs of the trajectories 1122 and 11320 for registration in a main display (e.g., the display 261 of FIG. 2). Even if the trajectory is registered in the sub-display, the electronic device may use the registered trajectory in the main display. When registration of the trajectory is completed, the electronic device may output a registration completion object 1150.

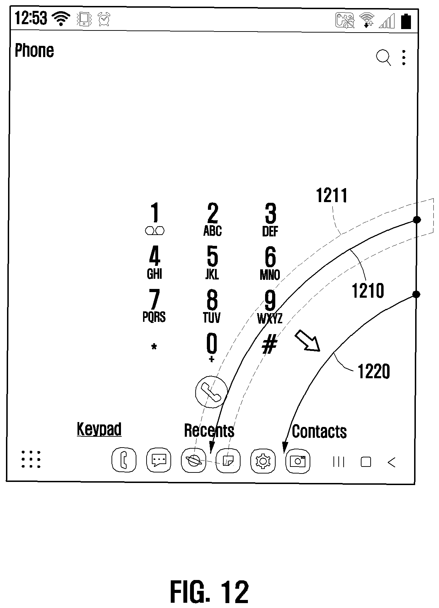

FIG. 12 is a view illustrating the judgment of a gesture based on an error range corresponding to a trajectory and correction of a registered trajectory according to an embodiment.

An electronic device (e.g., the electronic device 101 of FIG. 1) according to an embodiment may perform screen split based on detecting a trajectory 1210 of a pair of gestures in an error range 1211 based on the trajectory 1210 registered for screen split. For example, the electronic device may set the error range 1211 corresponding to a predetermined width based on the registered trajectory 1210 (e.g., the line-shaped trajectory 1210). The electronic device may determine whether a gesture input (or a pair of gesture inputs) drawing the trajectory 1210 is within the error range 1211 described above. For example, the electronic device may compare the registered trajectory 1210 corresponding to one hand (e.g., the right hand) among the registered trajectory 1210 with the input trajectory 1210 according to a gesture input starting from or reaching one edge (e.g., the right edge). Based on receiving a pair of input trajectories 1210 according to a pair of gesture inputs by both hands, the electronic device may compare the registered trajectory 1210 respectively corresponding to the pair of input trajectories 1210 with the error range 1211. For example, the electronic device may simultaneously perform an operation of comparing the trajectory 1210 registered for the left hand with the trajectory 1210 of the gesture input contacting the left edge, and an operation of comparing the trajectory 1210 registered for the right hand with the trajectory 1210 of the gesture input contacting the right edge.

The electronic device may correct the registered trajectory 1210 based on a failed gesture based on detecting a successful gesture in the error range after detecting the failed gesture out of the error range of the registered trajectory. For example, based on detecting the successful gesture after detecting a plurality of failed gestures, the electronic device may correct the registered trajectory 1210 using a trajectory according to the failed gesture. For example, the electronic device may newly register a trajectory 1220 according to the failed gesture. In another example, the electronic device may update and register a new trajectory (e.g., an average of two trajectories) based on the trajectory 1220 according to the failed gesture and the registered trajectory 1210. Accordingly, when a pattern deviating from a trajectory initially registered by the user is iteratively shown, the electronic device may easily update the trajectory that the user intends without a manual update by automatically correcting the registered trajectory.

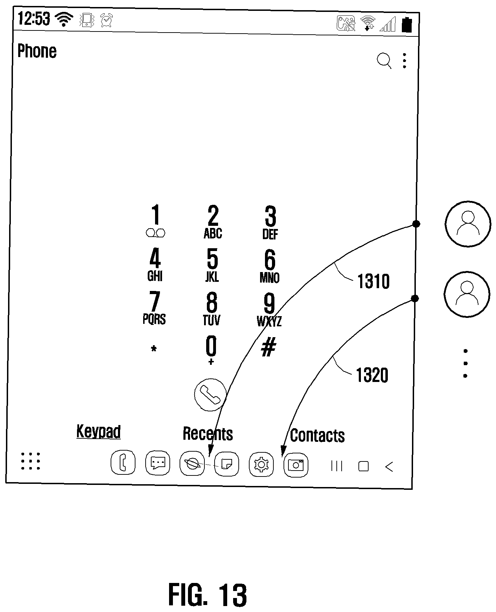

FIG. 13 is a view illustrating management of a registered trajectory for each user account according to an embodiment.

An electronic device (e.g., the electronic device 101 of FIG. 1) according to an embodiment may register the trajectory for screen split described above for each user account. For example, the electronic device may store a first registration trajectory 1310 for a first user account and a second registration trajectory 1320 for a second user account. When the electronic device is logged in with the first user account, the electronic device may compare an input gesture with the first registration trajectory 1310 (e.g., an error range corresponding to the first registration trajectory). Accordingly, the electronic device may provide an optimized trajectory for each individual user by storing and using trajectories of multiple users through accounts. It is possible. The electronic device may manage a registered trajectory for screen split for each user account. The registered trajectory may be corrected for each account as described above with reference to FIG. 12.

## Claims

1. An electronic device 101; 201; 301 comprising:
a display module 160;
a memory 130 configured to store computer-executable instructions; and
a processor 120 configured to execute the instructions by accessing the memory 130, wherein, when executed by the processor 120, the instructions cause the processor 120 to: split a target area 560 corresponding to a pair of gesture inputs 580 and 590 from a screen area 501; 601; 701; 940; 950; 960 of the display module 160 based on detecting the pair of gesture inputs 580 and 590 respectively starting from two edges of the display module 160 and reaching adjacent edges, and
display an application screen 502 adjusted based on the split target area 560 in the split target area 560 and display another screen in an area that is different from the split target area 560.

2. The electronic device 101; 201; 301 of claim 1, wherein the instructions are further configured to:
detect, as the pair of gesture inputs 580 and 590, gesture inputs respectively starting from edges of the display module 160 facing each other and reaching a same edge.

3. The electronic device 101; 201; 301 of one of claims 1 and 2, wherein the instructions are further configured to:
determine a size of the target area 560 based on points in which the pair of gesture inputs 580 and 590 contacts the edges of the display module 160 facing each other.

4. The electronic device 101; 201; 301of one of claims 1 to 3, wherein the instructions are further configured to:
split the target area 560 from the screen area 501; 601; 701; 940; 950; 960 of the display module 160 based on that a difference between start times and a difference between end times of the pair of gesture inputs 580 and 590 are less than or equal to a threshold time.

5. The electronic device 101; 201; 301 of one of claims 1 to 4, wherein the instructions are further configured to:
determine the pair of gesture inputs 580 and 590 to be a swipe input based on that at least one of the difference between the start times or the difference between end times of the pair of gesture inputs 580 and 590 exceeds the threshold time.

6. The electronic device 101; 201; 301 of one of claims 1 to 5, wherein the instructions are further configured to:
terminate screen split based on detecting a pair of additional gestures starting from two edges of the display module 160 and reaching adjacent edges during the screen split based on the pair of gesture inputs 580 and 590.

7. The electronic device 101; 201; 301 of one of claims 1 to 6, wherein the instructions are further configured to:
based on executing a different application during the screen split based on the pair of gesture inputs 580 and 590, display the executed different application in the target area 560.

8. The electronic device 101; 201; 301 of one of claims 1 to 7, wherein the instructions are further configured to:
perform screen split based on detecting a trajectory of the pair of gesture inputs 580 and 590 in an error range based on a trajectory 1210 registered for the screen split.

9. The electronic device 101; 201; 301 of one of claims 1 to 8, wherein the instructions are further configured to:
based on detecting a successful gesture in an error range of the registered trajectory 1210 after detecting a failed gesture deviating from the error range, correct the registered trajectory 1210 based on the failed gesture.

10. The electronic device 101; 201; 301 of one of claims 1 to 9, wherein the instructions are further configured to:
manage the registered trajectory 1210 for screen split for each user account.

11. The electronic device 101; 201; 301 of one of claims 1 to 10, wherein the instructions are further configured to:
based on that a trajectory is pre-registered before triggering at least one of a pop-up screen or a keyboard screen, determine an area to output the triggered screen based on comparison between the triggered screen and a plurality of areas based on the pre-registered trajectory 1210.

12. The electronic device 101; 201; 301 of one of claims 1 to 11, wherein the instructions are further configured to:
output a pop-up screen in one of the plurality of areas based on the registered trajectory 1210, and
the plurality of areas comprises at least two of a first area 942; 1010 inscribed to the pre-registered trajectory 1210, a second area 952; 1020 circumscribed to the pre-registered trajectory 1210, or a third area 962; 1030 reflecting a margin in the pre-registered trajectory 1210.

13. The electronic device 101; 201; 301 of one of claims 1 to 12, wherein the instructions are further configured to:
select an area to output the pop-up screen in the plurality of areas based on a ratio of the pop-up screen comprised in the plurality of areas based on the registered trajectory 1210.

14. The electronic device 101; 201; 301 of one of claims 1 to 13, wherein the instructions are further configured to:
based on that a pop-up screen is larger than a selected area from the plurality of areas based on the registered trajectory 1210, output a portion of the pop-up screen in the selected area, and
expose a remaining portion of the pop-up screen in response to an additional manipulation of a user.

15. A method implemented by a processor 120, the method comprising: splitting a target area 560 corresponding to a pair of gesture inputs 580 and 590 from a screen area 501; 601; 701; 940; 950; 960 of a display module 160 based on detecting the pair of gesture inputs 580 and 590 respectively starting from two edges of the display module 160 and reaching adjacent edges; and
displaying an application screen 502 adjusted based on the split target area 560 in the split target area 560 and displaying another screen in an area that is different from the split target area 560.
